# EUROPÄISCHE PATENTANMELDUNG

(11) **EP 4 782 180 A1**
(43) Veröffentlichungstag der Anmeldung: **29.07.2026**
(21) Anmeldenummer: 26151714.8
(22) Anmeldetag: 14.01.2026
(51) Int. Cl.: B29C 55/02

(54) **RECKANLAGE**

(30) Priorität: 23.01.2025 DE 102025102444
(71) Anmelder: Brückner Maschinenbau GmbH, 83313 Siegsdorf (DE)
(72) Erfinder: Hacksteiner, Hannes, 5760 Saalfelden (AT); Huber, Christian, 83313 Siegsdorf (DE)
(74) Vertreter: Flach Bauer & Partner Patentanwälte mbB

(57) **Zusammenfassung**

Eine Reckanlage (10) zum Recken einer Folie (F), insbesondere eine Quer- und/oder Simultan-Reckanlage, hat einen Ofen (12), in dem ein Laufbereich (L) für die Folie (F) definiert ist, und wenigstens eine Temperaturmessvorrichtung (16) mit wenigstens zwei Messgeräten (18) und einer Steuereinheit (20).

Die Messgeräte (18) haben jeweils ein linienförmiges Blickfeld (B) und sind dazu eingerichtet, die Temperatur der Folie (F) im Blickfeld (B) optisch zu messen, wobei die Blickfelder (B) im Bereich des Laufbereichs (L) einen Messbereich (M) definieren, wobei die Steuereinheit (20) dazu ausgebildet ist, ein Temperaturprofil (T) zu ermitteln, das auf im Messbereich (M) gemessenen Temperaturen basiert, wobei die Temperaturen für das Temperaturprofil (T) von verschiedenen der Messgeräte (18) gemessen wurden.

Die Messgeräte (18) sind vorzugsweise IR-Kameras, Linienscanner und/oder Wärmebildkameras.

## Beschreibung

Die Erfindung betrifft eine Reckanlage zum Recken einer Folie, insbesondere eine Quer- und/oder Simultanreckanlage.

Reckanlagen finden insbesondere bei der Herstellung von Kunststofffolien Anwendung. Üblicherweise wird in solchen Anlagen die zu reckende Folie mittels eines Folientransportsystems in einer Laufrichtung durch einen Ofen der Anlage bewegt. Im Ofen wird die zu reckende Folie vor dem Reckvorgang erwärmt und auch beim, während und nach dem Reckvorgang auf einer vorbestimmten Temperatur gehalten. Anschließend wird die gereckte Folie im Ofen abgekühlt.

Bei der Herstellung von Folien ist es ausgesprochen wichtig, dass die Folie über ihre gesamte Breite eine vorbestimmte Temperatur aufweist, um Defekte oder Inhomogenitäten, die aufgrund von Temperaturschwankungen oder falscher Temperaturen auftreten können, zu vermeiden.

Hierzu ist es bekannt, die Temperatur der Folie außerhalb des Ofens unmittelbar nach dem Verlassen des Ofens oder an einer kühleren Stelle innerhalb des Ofens optisch mittels beispielsweise eines Pyrometers zu ermitteln, oder punktförmig die Lufttemperatur innerhalb des Ofens zu messen. Die Bestimmung der Lufttemperatur ist als indirektes Messverfahren mit Unsicherheiten verbunden, und die optischen Messverfahren decken nur einen geringen Teil der Folienbreite ab.

Es ist daher Aufgabe der Erfindung, eine Reckanlage bereitzustellen, die ein Temperaturprofil der Folie innerhalb des Ofens zur Verfügung stellt.

Die Aufgabe wird gelöst durch eine Reckanlage zum Recken einer Folie, insbesondere eine Quer- und/oder Simultan-Reckanlage, mit einem Ofen, in dem ein Laufbereich für die Folie definiert ist und wenigstens einer Temperaturmessvorrichtung mit wenigstens zwei Messgeräten und einer Steuereinheit. Die Messgeräte haben jeweils ein Blickfeld und sind dazu eingerichtet, die Temperatur von Gegenständen im Blickfeld optisch zu messen, wobei die Blickfelder im Bereich des Laufbereichs linienförmig sind und einen Messbereich definieren. Die Steuereinheit ist dazu ausgebildet, ein Temperaturprofil zu ermitteln, das auf im Messbereich gemessenen Temperaturen basiert, wobei die Temperaturen von verschiedenen der Messgeräte gemessen wurden.

Durch die Verwendung mehrerer optischer Messgeräte, die innerhalb des Ofens platziert sind, ist es möglich, eine direkte und somit genaue Temperaturmessung der Folie innerhalb des Ofens durchzuführen. Gleichzeitig wird das Temperaturprofil dadurch deutlich vergrößert und die Aussagekraft verbessert, da die gemessenen Temperaturen von verschiedenen Messgeräten verwendet werden.

Die Folie kann mit hohen Geschwindigkeiten, beispielsweise Geschwindigkeiten zwischen 50 und 1.000 m/min, durch den Ofen gezogen werden, wobei aufgrund der Verwendung mehrerer Messgeräte trotz dieser Geschwindigkeiten präzise Messungen möglich sind.

Der Messbereich hat insbesondere eine Längsausdehnung, wobei das Temperaturprofil den Verlauf der Temperatur entlang der Längsausdehnung angibt. Beispielsweise stimmt die Längsausdehnung mit der Querrichtung des Ofens überein, d.h. mit der horizontalen Richtung quer zur Laufrichtung der zu reckenden Folie.

Unter "linienförmig" wird in diesem Zusammenhang verstanden, dass die Blickfelder jeweils eine Längsausdehnung haben, die deutlich, beispielsweise um Größenordnungen, größer ist als ihre Querausdehnung. Die Längsausdehnung erstreckt sich beispielsweise in Arbeitsrichtung der Reckanlage, d.h. quer zur Laufrichtung der Folie.

Das Temperaturprofil deckt beispielsweise den gesamten Messbereich ab und/oder umfasst auch Bereiche außerhalb des Messbereichs. Zum Beispiel können Werte des Temperaturprofils, die außerhalb des Messbereichs liegen, durch die Steuereinheit genähert werden, wie durch Extrapolation.

Das Temperaturprofil basiert insbesondere auf gemessenen Temperaturen aller Messgeräte einer der Temperaturmessvorrichtungen.

Beispielsweise ermittelt die Steuereinheit nur ein einziges Temperaturprofil pro Messzeitpunkt.

Insbesondere ist die Steuereinheit auch dazu ausgebildet, das Temperaturprofil auszugeben, beispielsweise an eine andere Komponente, wie eine Anlagensteuerung, und/oder mittels einer Bildschirmeinheit.

Die Ausgabe des ermittelten Temperaturprofils kann an einer Bildschirmeinheit der Steuereinheit oder an einer von der Steuereinheit entfernten Bildschirmeinheit erfolgen, wie einem separaten Terminal einer Bildschirmeinheit der Anlagensteuerung oder einem mobilen Endgerät (z.B. Smartphone, Tablet oder Laptop).

In einem Aspekt sind die Messgeräte oberhalb oder unterhalb des Laufbereichs angeordnet, und/oder die Messgeräte sind IR-Kameras, Linescanner und/oder Wärmebildkameras. Auf diese Weise können die Messgeräte die Folie besonders gut erfassen bzw. kann auf erprobte Messverfahren zurückgegriffen werden.

Insbesondere sind die Messgeräte im Ofen angeordnet.

Beispielsweise sind die Messgeräte sog. Linescanner, d.h. linienscannende Pyrometer bzw. Kameras, wie Linescanner der MP-Serie der Fluke Process Instruments GmbH.

Für eine besonders detaillierte Messung kann sich das Temperaturprofil und/oder der Messbereich quer zur Laufrichtung der Folie entlang des Laufbereichs und/oder über die gesamte Breite des Laufbereichs erstrecken.

Die Breite des Laufbereichs entspricht beispielsweise der Breite der Folie, d.h. der Ausdehnung der Folie quer zur Laufrichtung.

In einer Ausgestaltung erstrecken sich die Blickfelder der Messgeräte quer zur Laufrichtung der Folie entlang des Laufbereichs und/oder sind parallel zueinander, insbesondere liegen sie auf einer gemeinsamen Geraden. Auf diese Weise kann mit möglichst wenigen Messgeräten ein großer Bereich der Folie vermessen werden.

Um die Folie vollständig zu vermessen, können die Blickfelder der Messgeräte im Laufbereich aneinander angrenzen oder teilweise überlappen und/oder der Messbereich ununterbrochen sein.

In einer Ausführungsform weist der Ofen eine Hauptkammer auf, durch die sich der Laufbereich erstreckt, insbesondere wobei die Messgeräte in der Hauptkammer angeordnet sind. Mittels der Hauptkammer kann die Temperatur im Ofen äußerst konstant gehalten werden. Eine besonders platzsparende Konstruktion ergibt sich, wenn die Messgeräte in der Hauptkammer angeordnet sind. Hierbei ist zu beachten, dass die Messgeräte für die in der Hauptkammer herrschenden Temperaturen ausgelegt sind, beispielsweise für Temperaturen über 180°C.

In einer Ausführungsvariante weist der Ofen wenigstens eine Nebenkammer auf, die mit der Hauptkammer optisch verbunden ist, wobei die Messgeräte in der oder in mehrerer der wenigstens einen Nebenkammer angeordnet sind. Auf diese Weise können die Temperaturen in der Umgebung der Messgeräte verringert werden, sodass die thermische Belastung und die Anforderungen an die Messgeräte reduziert werden.

Beispielsweise sind die Messgeräte vollständig in der entsprechenden Nebenkammer angeordnet oder teilweise in der entsprechenden Nebenkammer und teilweise außerhalb des Ofens angeordnet. Im letzteren Fall können die Messgeräte einfach von außerhalb des Ofens elektrisch angeschlossen werden.

Es können mehrere Nebenkammern vorgesehen sein, insbesondere so viele Nebenkammern wie Messgeräte. Beispielsweise ist in jeder Nebenkammer genau ein Messgerät angeordnet.

Um die Temperatur in der Nebenkammer gering zu halten, kann die Hauptkammer eine Wandung aufweisen, in der wenigstens eine Öffnung ausgebildet ist, die in eine entsprechende der Nebenkammern mündet, wobei sich das Blickfeld des in der entsprechenden Nebenkammer angeordneten Messgeräts durch die Öffnung in die Hauptkammer erstreckt.

Die Wandung ist beispielsweise eine Decke oder ein Boden der Hauptkammer. Die Nebenkammer kann entsprechend oberhalb oder unterhalb der Hauptkammer angeordnet sein.

Zur weiteren Verbesserung der thermischen Trennung zwischen der Hauptkammer und der jeweiligen Nebenkammer kann die Breite und/oder die Länge der Öffnung größer als die Breite bzw. die Länge des Blickfelds im Bereich der Öffnung sein, oder die Breite und/oder die Länge der Öffnung entspricht der Breite bzw. der Länge des Blickfelds im Bereich der Öffnung.

In einer Ausgestaltung können die Hauptkammer, insbesondere die Wandung, und/oder die Nebenkammer gegenüber einander und/oder zur Umgebung des Ofens hin thermisch isoliert sein, um den Temperaturverlust des Ofens zu verringern.

Beispielsweise sind Dämmplatten an der Wandung, insbesondere zwischen der Hauptkammer und der Nebenkammer, vorgesehen.

In einer Ausführungsform ist der Ofen dazu ausgebildet, wenigstens einen Luftvorhang für eine der wenigstens einen Nebenkammer zu erzeugen, wobei der Luftvorhang einen Luftaustausch zwischen der Hauptkammer und der entsprechenden Nebenkammer reduziert oder unterbindet, insbesondere wobei der Luftvorhang in der zugehörigen Öffnung, innerhalb der Hauptkammer die zugehörige Öffnung abdeckend oder innerhalb der Nebenkammer die zugehörige Öffnung abdeckend angeordnet ist. Mittels eines Luftvorhangs wird die thermische Trennung zwischen der Hauptkammer und der entsprechenden Nebenkammer weiter verbessert, ohne die Messung der Messgeräte zu beeinflussen.

Es sind beispielsweise so viele Luftvorhänge wie Nebenkammern vorgesehen.

Beispielsweise weist der Ofen für jeden des wenigstens einen Luftvorhangs einen Luftauslass zur Erzeugung des Luftvorhangs auf, wobei der Luftauslass in die zugehörige Öffnung, in die Hauptkammer an die zugehörige Öffnung angrenzend oder in die Nebenkammer an die zugehörige Öffnung angrenzend mündet. Auf diese Weise kann ein Luftvorhang einfach und zuverlässig realisiert werden.

Alternativ oder zusätzlich kann die Öffnung durch eine Glasscheibe verschlossen sein. Beispielsweise ist bzw. sind das Messgerät und/oder die Steuereinheit derart ausgebildet, dass die Glasscheibe die Messung der Temperatur im Messbereich nicht negativ beeinflusst.

In einer Ausgestaltung ist in der Hauptkammer ein Trichter angeordnet, der eine der wenigstens einen Öffnung umgibt, sich von der entsprechenden Wandung, in der die wenigstens eine Öffnung vorgesehen ist, aus zum Laufbereich hin erstreckt, und sich zum Laufbereich hin weitet, insbesondere wobei die Reckanlage einen Ventilator aufweist, der dazu ausgebildet ist, Luft in das Innere des Trichters zu fördern. Durch den Trichter allein oder verstärkt durch den Ventilator kann auf diese Weise vermieden werden, dass das Messgerät verschmutzt.

Für besonders präzise Temperaturen im Ofen, sind die Hauptkammer, insbesondere die Wandung, und/oder die Nebenkammer gegenüber einander und/oder zur Umgebung des Ofens hin thermisch isoliert.

In einer Ausführungsform weist die Temperaturmessvorrichtung drei, vier oder mehr Messgeräte auf, wodurch auch Temperaturprofile für breite Folien präzise ermittelt werden können.

Beispielsweise ist die Steuereinheit in eines der Messgeräte integriert, ist separat von den Messgeräten ausgeführt, ist eine vom Ofen separate Computereinheit und/oder ist in eine Anlagensteuerung der Reckanlage integriert, wodurch die Temperaturmessvorrichtung kompakt ist, die Steuereinheit geringen thermischen Belastungen ausgesetzt ist bzw. die Anzahl an Komponenten reduziert wird.

Zum Beispiel ist die als Steuereinheit ausgeführte Computereinheit vom Ofen räumlich getrennt, ein lokaler oder entfernter Server oder wird auf einem lokalen oder entfernten Server ausgeführt.

Für besonders aussagekräftige Temperaturmessungen kann die Temperaturmessvorrichtung am Eingang des Ofens, am Ausgang des Ofens, in einer Vorheizzone des Ofens, insbesondere an deren Ende, in einer Reckzone des Ofens, insbesondere an deren Ende, in einer Annealingzone des Ofens, insbesondere an deren Anfang, in einer Neutralzone des Ofens zwischen der Annealingzone und einer Kühlzone des Ofens, und/oder in der Kühlzone angeordnet sein.

Die Reckanlage kann mehrere Temperaturmessvorrichtungen mit Messgeräten an verschiedenen Orten des Ofens aufweisen, wodurch eine noch genauere Überwachung der Temperatur der Folie möglich ist.

In einem unabhängigen erfinderischen Aspekt, der derzeit nicht Teil der beanspruchten Erfindung ist, weist die eine oder mehrere der Temperaturmessvorrichtungen nur ein Messgerät auf. Das Messgerät ist, wie zuvor beschrieben, in einer Nebenkammer des Ofens angeordnet. Das Temperaturprofil basiert dann auf den gemessenen Temperaturen dieses einen Messgeräts. Mit diesem Aspekt können die Aspekte der abhängigen Ansprüche, insbesondere der Ansprüche 6 bis 13 unbeachtlich von Anspruch 1 kombiniert werden.

Temperaturmessvorrichtungen mit nur einem Messgerät sind zum Beispiel in Bereichen des Ofens vor der Reckzone der Folie vorgesehen, wie am Anfang und am Ende der Vorheizzone, können jedoch auch in anderen Bereichen des Ofens zum Einsatz kommen.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine Reckanlage gemäß einer Ausführungsform der Erfindung in schematischer Draufsicht,
- Fig. 2: äußerst schematisch einen Schnitt durch die Reckanlage gemäß Figur 1 entlang der Linie II-II der Figur 1,
- Fig. 3: äußerst schematisch einen Schnitt durch die Reckanlage gemäß Figur 1 entlang der Linie III-III der Figur 1,
- Fig. 4: ein beispielhaftes Temperaturprofil, das mittels einer der Temperaturmessvorrichtungen der Reckanlage gemäß Figur 1 erzeugt wurde,
- Fig. 5: einen Schnitt entsprechend dem der Figur 2 einer Reckanlage gemäß einer zweiten Ausführungsform der Erfindung,
- Fig. 6, 7: schematisch jeweils eine Temperaturmessvorrichtung einer dritten bzw. vierten Ausführungsform der Erfindung,
- Fig. 8: äußerst schematisch einen Schnitt durch eine Reckanlage gemäß einer fünften Ausführungsform der Erfindung,
- Fig. 9: äußerst schematisch eine weitere Temperaturmessvorrichtung der Reckanlage im Schnitt, und
- Fig. 10: äußerst schematisch einen Ausschnitt eines Schnitts durch eine Reckanlage gemäß einer sechsten Ausführungsform der Erfindung.

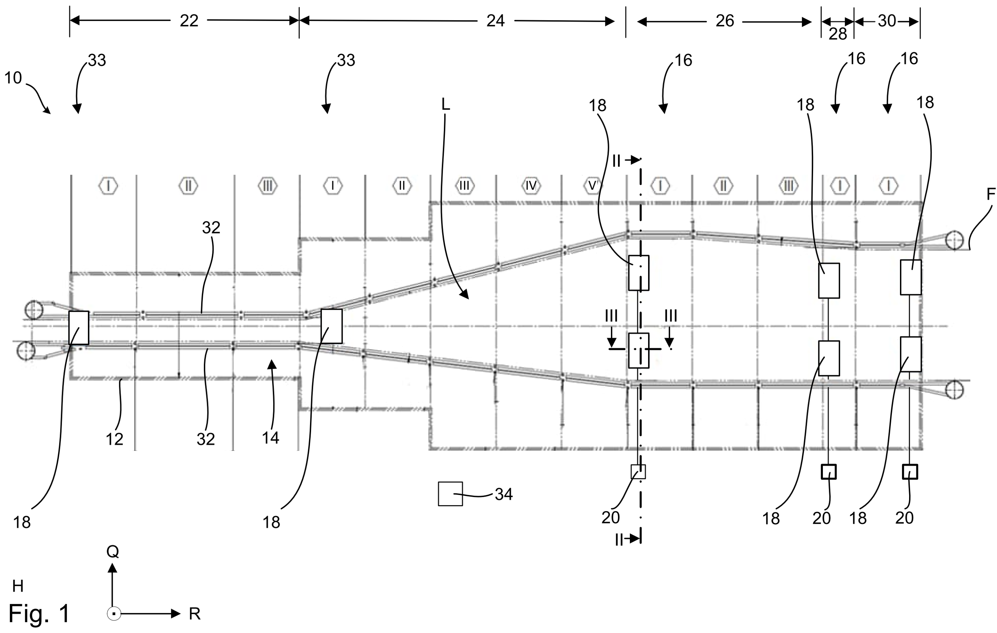

In Figur 1 ist äußerst schematisch eine Reckanlage 10 gemäß der Erfindung dargestellt.

Im gezeigten ersten Ausführungsbeispiel ist die Reckanlage eine Querreckanlage, auch TDO ("Transverse Direction Orienter") genannt. Denkbar ist auch, dass die Reckanlage eine Simultanreckanlage ist.

Die Reckanlage 10 weist einen Ofen 12, ein Folientransportsystem 14 und wenigstens eine Temperaturmessvorrichtung 16 mit jeweils mehreren Messgeräten 18 und einer Steuereinheit 20 auf.

Der Ofen 12 hat eine Abzugsrichtung, die der Laufrichtung R der zu reckenden Folie F entspricht. Quer zur Laufrichtung R und horizontal verläuft die Querrichtung Q des Ofens 12 und vertikal die Hochrichtung H.

Der Ofen 12 hat entlang der Laufrichtung R verschiedene Zonen zur Behandlung der zu reckenden Folie F. Die Zonen haben teilweise verschiedene Abschnitte, in denen die Temperatur unterschiedlich sein kann.

In der ersten Zone 22, auch Vorheizzone genannt, wird die Folie F erwärmt. Die erste Zone 22 hat z.B. drei Abschnitte I-III.

In der anschließenden zweiten Zone 24 ("Reckzone") mit fünf Abschnitten I-V wird die Folie F in Querrichtung Q gereckt, sodass sie zum Ende der zweiten Zone 24 eine größere Breite aufweist als zu Beginn.

Nach erfolgter Reckung durchläuft die Folie F dann die dritte Zone 26 ("Wärmebehandlungszone", "Weiterheizzone" und/oder "Annealingzone" genannt), bei der eine Relaxierung der Folie F bei hohen Temperaturen erfolgen kann. Die dritte Zone 26 hat drei beispielsweise Abschnitte I-III.

Anschließend verläuft die Folie F durch eine vierte Zone 28 und eine fünfte Zone 30 ("Kühlzone"), wobei die Folie F in der fünften Zone 30 abgekühlt wird. Die Kühlzone hat z.B. einen Abschnitt I.

Die vierte Zone 28 wird Neutralzone genannt und dient zur Trennung der dritten Zone 26 und der fünften Zone 30. Die Neutralzone ist beispielsweise ein leerer Raum ohne Belüftung. Die Neutralzone hat z.B. einen Abschnitt I.

Die Zonen der Reckanlage 10 können auch anders aufgeteilt sein und/oder in ihrer Länge anders ausgeführt sein. Zum Beispiel können mehr, weniger oder kürzere Neutralzonen vorgesehen sein oder die Neutralzonen können an anderen Stellen, auch zusätzlich, angeordnet sein. Auch Änderungen an den übrigen Zonen sind denkbar.

Das Folientransportsystem 14 umfasst, in an sich bekannter Weise, zwei Transportschienen 32, die gegenüber einer Mittelebene der Reckanlage 10 bzw. des Ofens 12 spiegelsymmetrisch in einem Abstand angeordnet sind und die sich zumindest teilweise im Ofen 12 erstrecken.

In einer Einlaufzone sowie einer Auslaufzone, in denen die Folie F der Reckanlage 10 zu- bzw. abgeführt wird, verlaufen die Transportschienen 32 außerhalb des Ofens 12.

Die Folie F wird in an sich bekannter Weise durch Kluppen (nicht dargestellt) des Folientransportsystems 14, die entlang der Transportschienen 32 geführt werden, gegriffen und in Laufrichtung R durch den Ofen 12 transportiert.

Auf diese Weise wird durch die Transportschienen 32 ein Laufbereich L im Ofen 12 definiert, in dem die Folie F durch den Ofen 12 transportiert wird.

Die Breite des Laufbereichs L in Querrichtung Q, d.h. senkrecht zur Laufrichtung R und zur Hochrichtung H, ist so breit wie die Folie F.

Die Folie F wird zum Beispiel mit hohen Geschwindigkeiten, beispielsweise Geschwindigkeiten zwischen 50 und 1.000 m/min, durch den Ofen 12 gezogen.

Beispielsweise weist der Ofen 12, wie im gezeigten Ausführungsbeispiel, drei Temperaturmessvorrichtungen 16 auf, die mehrere Messgeräte 18 haben. Denkbar ist ebenfalls, dass der Ofen 12 nur eine, zwei oder mehr als drei Temperaturmessvorrichtungen 16 aufweist.

Beispielsweise ist eine der Temperaturmessvorrichtungen 16 im ersten Abschnitt der dritten Zone 26 (Nach der Reckzone, Anfang der Annealingzone), d.h. an deren Anfang, angeordnet.

Eine weitere der Temperaturmessvorrichtungen 16 ist z.B. in der vierten Zone 28 (Neutralzone) angeordnet, und die dritte Temperaturmessvorrichtung 16 ist in der fünften Zone 30 (Kühlzone) angeordnet, insbesondere an deren Ende. Somit ist diese Temperaturmessvorrichtung 16 am Ausgang des Ofens 12 angeordnet.

Denkbar ist auch, dass ein einzelnes Messgerät 33 in der ersten Zone 22 (Vorheizzone) angeordnet ist, beispielsweise am Eingang des Ofens 12 oder im letzten Abschnitt der Vorheizzone.

Im gezeigten Ausführungsbeispiel sind an diesen Stellen Temperaturmessvorrichtungen vorgesehen, die lediglich ein Messgerät 18 aufweisen. Denkbar ist jedoch auch, dass diese Temperaturmessvorrichtungen 16 solche mit mehreren Messgeräten 18 sind.

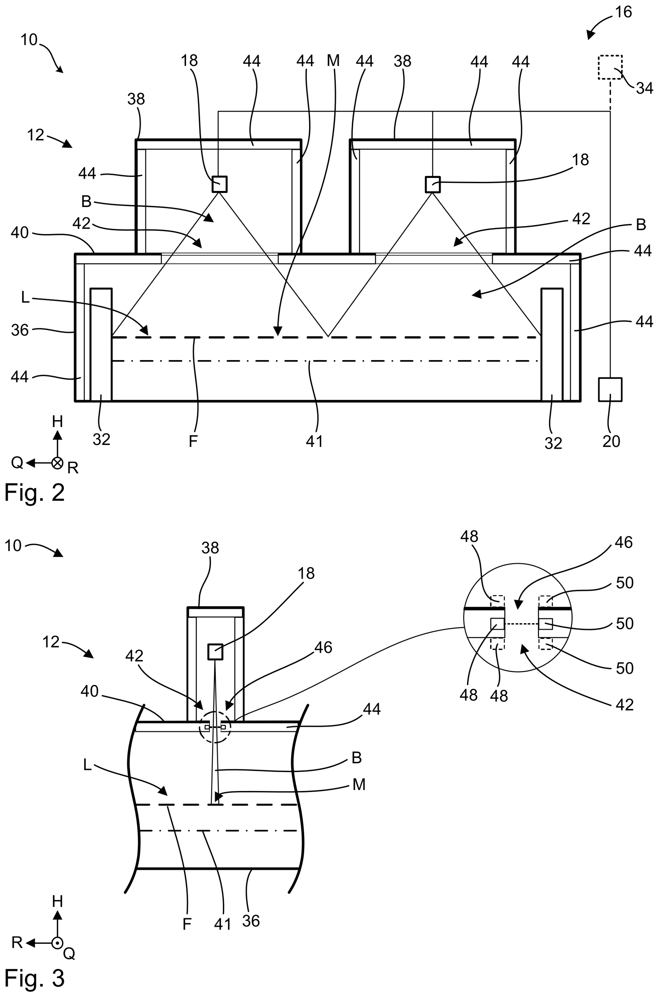

Die Figuren 2 und 3 zeigen einen Längs- bzw. Querschnitt durch den Ofen 12 im Bereich einer der Temperaturmessvorrichtungen 16.

Gut zu erkennen ist, dass die Temperaturmessvorrichtung 16 zwei Messgeräte 18 aufweist. Denkbar ist auch, dass die Temperaturmessvorrichtung 16 drei, vier oder mehr Messgeräte 18 aufweist.

Die Steuereinheit 20 ist separat von den Messgeräten 18 dargestellt und außerhalb des Ofens 12 angeordnet. Denkbar ist auch, dass die Steuereinheit 20 in eines der Messgeräte 18 integriert ist, beispielsweise eine Steuereinheit des Messgerätes 18 ist oder darin integriert ist. Ebenfalls ist es denkbar, dass die Steuereinheit 20 in eine übergeordnete Anlagensteuerung 34 der Reckanlage 10 integriert ist.

Der Ofen 12 weist eine Hauptkammer 36 auf und beispielsweise, wie im gezeigten Ausführungsbeispiel, mehrere Nebenkammern 38.

Die Hauptkammer 36 ist durch eine Wandung 40 begrenzt, die beispielsweise eine Decke, einen Boden und zwei Seitenwände hat.

Innerhalb der Hauptkammer 36 ist das Folientransportsystem 14 mit den Transportschienen 32 und dem Laufbereich L (gestrichelt dargestellt) angeordnet.

Außerdem befinden sich innerhalb der Hauptkammer 36 zumindest Teile von Heizvorrichtungen, beispielsweise Düsenkästen (nicht gezeigt), um erwärmte Luft in den Laufbereich L strömen zu lassen.

Die Messgeräte 18 dienen zur optischen Temperaturmessung und sind beispielsweise Pyrometer oder insbesondere IR-Kameras bzw. Wärmebildkameras. Die Messgeräte 18 sind dazu eingerichtet, die Temperatur von Gegenständen in ihrem Blickfeld optisch zu messen, beispielsweise anhand von thermischer Strahlung.

Die Blickfelder B der Messgeräte 18 sind dabei linienförmig, d.h. sie haben eine Längsausdehnung, die deutlich, beispielsweise um wenigstens eine Größenordnung, größer ist als ihre Querausdehnung.

Zu diesem Zweck sind die Messgeräte 18 als Zeilenkameras oder Scanner ausgebildet.

Beispielsweise handelt es sich bei den Messgeräten 18 um Linescanner der MP-Serie der Fluke Process Instruments GmbH.

Die Blickfelder B sind auf den Laufbereich L gerichtet, wodurch der Teil des Laufbereichs L, der von einem der Blickfelder B der Messgeräte 18 erfasst wird, ein Teil des Messbereichs M ist.

Die linienförmigen Blickfelder B und damit der Messbereich M erstrecken sich ebenfalls in Querrichtung Q, d.h. quer zur Laufrichtung R der Folie F. Die Blickfelder B sind quer zueinander und liegen beispielsweise, wie im gezeigten Ausführungsbeispiel, auf einer gemeinsamen Geraden in Querrichtung Q.

Die Messgeräte 18 sind derart platziert, dass im Laufbereich L die Blickfelder B benachbarter Messgeräte 18 aneinander angrenzen, wodurch der Messbereich M ununterbrochen ist.

Zu Einstellung des Messbereichs M sind die Messgeräte 18 beispielsweise in Laufrichtung R, Hochrichtung H und/oder Querrichtung Q innerhalb der Nebenkammer 38 beweglich.

Die Messgeräte 18 sind beispielsweise, wie im gezeigten Ausführungsbeispiel, oberhalb des Laufbereichs L angeordnet. Entsprechend sind die Nebenkammern 38 oberhalb der Hauptkammer 36 positioniert.

Auf der von den Messgeräten 18 abgewandten Seite des Messbereichs M, im gezeigten Ausführungsbeispiel also unterhalb des Laufbereichs L, kann ein Reflektor 41 (strichpunktiert dargestellt) angeordnet sein.

Der Reflektor 41 deckt beispielsweise zumindest den Bereich ab, der den Blickfeldern B der Messgeräte 18 einer oder mehrerer der Temperaturmessvorrichtungen 16 in der Höhe des Reflektors 41 entspricht. Der Reflektor 41 bildet somit einen einheitlichen Abschluss des Blickfeldes B aller Messgeräte 18 der gleichen Temperaturmessvorrichtung 18.

Der Reflektor 41 ist zum Beispiel als Platte, beispielsweise als ein 0,5 bis 3 mm dickes Blech, ausgeführt, die insbesondere horizontal orientiert ist.

Als Material des Reflektors 41 kann Stahl, verzinkter Stahl, feueraluminierter Stahl, Edelstahl oder Aluminium verwendet werden.

Der Reflektor 41 deckt Objekte, wie Querträger, ab, die die Temperaturmessung beeinflussen könnten. Somit wird eine gleichmäßige Hintergrundtemperatur für die Temperaturmessung erreicht.

In jede der Nebenkammern 38 ist eines der Messgeräte 18 vorgesehen, sodass genau so viele Nebenkammern 38 vorhanden sind, wie Messgeräte 18 in der Temperaturmessvorrichtung 16. Im gezeigten Ausführungsbeispiel sind somit zwei Nebenkammern 38 vorgesehen, in der jeweils genau ein Messgerät 18 befestigt ist.

Im Folgenden wird eine Nebenkammer 38 im Detail beschrieben, wobei die anderen Nebenkammern 38 gleich ausgeführt sind.

In der Wandung 40 ist zwischen der Hauptkammer 36 und der Nebenkammer 38, im gezeigten Ausführungsbeispiel also in der Decke, eine Öffnung 42 ausgebildet, die in die entsprechende Nebenkammer 38 mündet.

Durch die Öffnung 42 sind somit die Hauptkammer 36 und die Nebenkammer 38 optisch miteinander verbunden, und das Messgerät 18 ist so angeordnet, dass sein Blickfeld B durch die Öffnung 42 in die Hauptkammer 36 reicht.

Die Öffnung 42 ist beispielsweise rechteckig, insbesondere schlitz- bzw. linienförmig, wobei die Länge der Öffnung 42 der Länge des Blickfelds B im Bereich der Öffnung, d.h. in der Höhe in Hochrichtung H der Öffnung, entspricht. Auch die Breite der Öffnung 42 entspricht der Breite des Blickfelds B im Bereich der Öffnung 42.

Die Öffnung 42 erstreckt sich ebenfalls, so wie das Blickfeld B, in Querrichtung Q.

Auf diese Weise wird der Luftaustausch zwischen der Hauptkammer 36 und der Nebenkammer 38 auf ein Minimum reduziert, um die Temperatur in der Nebenkammer 38 möglichst gering zu halten und um den Wärmeverlust aus der Hauptkammer 36 zu minimieren.

Zur Isolierung sind die Wandung 40 der Hauptkammer 36 und die Wandung der Nebenkammer 38 zur Umgebung des Ofens 12 hin isoliert, beispielsweise durch Dämmplatten 44, die an der Wandung 40 befestigt sind.

Auch ist eine thermische Isolierung, insbesondere Dämmplatten, zwischen der Hauptkammer 36 und der Nebenkammer 38 ausgebildet, um die Temperatur in der Nebenkammer 38 niedrig zu halten und den Wärmeverlust aus der Hauptkammer 36 zu minimieren.

Die Öffnung 42 erstreckt sich entsprechend auch durch die thermische Isolierung, beispielsweise die Dämmplatte 44.

Denkbar ist, dass in einer der Nebenkammern 38 mehrere Messgeräte 18 angeordnet sind. Dabei kann für jedes Messgerät 18 bzw. das Blickfeld B jedes Messgeräts 18 eine separate Öffnung 42 vorgesehen sein oder die Blickfelder B der Messgeräte 18 in einer Nebenkammer 38 erstrecken sich durch die gleiche Öffnung 42.

Beispielsweise können in diesem Fall in der Nebenkammer 38 eine oder mehrere Trennwände zwischen den Messgeräten 18 angeordnet sein.

Auch ist es möglich, dass alle Messgeräte 18 in nur einer Nebenkammer 38 angeordnet sind.

Denkbar ist ebenso, dass die Messgeräte 18 unterhalb des Laufbereichs L angeordnet sind, sodass dann die Nebenkammer 38 in diesem Fall unterhalb der Hauptkammer 36 angeordnet ist.

Beispielsweise, wie im gezeigten Ausführungsbeispiel, kann der Ofen 12 zudem zu jeder der Nebenkammern 38 einen Luftvorhang 46 aufweisen. Beispielsweise ist in der Öffnung 42 ein Luftauslass 48 angeordnet, der in die Öffnung 42 gerichtet ist. Der Luftauslass 48 ist beispielsweise mit einer Druckluftquelle bzw. Luftversorgung der Reckanlage 10 fluidisch verbunden.

Der Luftauslass 48 erstreckt sich dabei über die gesamte Seite der Öffnung 42, an der er vorgesehen ist. Beispielsweise wird der Luftauslass 48 durch ein perforiertes Anschlussrohr realisiert, das sich insbesondere über die gesamte Länge der Öffnung 42 erstreckt.

Im gezeigten Ausführungsbeispiel ist der Luftauslass 48 in einer der Längsseiten der Öffnung 42 angeordnet, sodass eine Luftströmung in oder gegen die Laufrichtung R der Folie F erzeugt wird.

Zudem kann zum Luftauslass 48 gegenüberliegend ein Luftablass 50 vorgesehen sein, der von der Luft des Luftauslasses 48 angeströmt wird, um Turbulenzen in der Hauptkammer 36, die sich negativ auf die Folienqualität auswirken könnten, zu vermeiden. Durch den Luftablass 50 kann Luft aktiv abgesaugt werden, damit keine überschüssige, kalte Luft in den Ofen gelangt.

Im Betrieb strömt Luft durch den Luftauslass 48 zum Luftablass 50, wodurch ein Luftvorhang 46 in der gesamten Öffnung 42 erzeugt wird, der einen Luftaustausch zwischen der Nebenkammer 38 und der Hauptkammer 36 unterbindet oder zumindest reduziert.

Insbesondere ist für jede der Nebenkammern 38 ein solcher Luftvorhang 46 bzw. entsprechende Luftauslässe 48 vorgesehen.

Denkbar ist auch, dass der Luftvorhang 46 bzw. der Luftauslass 48 und der optionale Luftablass 50 innerhalb der Hauptkammer 36 oder innerhalb der Nebenkammer 38 an die Öffnung 42 angrenzend angeordnet sind, sodass der entsprechende Luftvorhang 46 die zugehörige Öffnung 42 zuverlässig abdeckt (in der Vergrößerung der Figur 3 gestrichelt angedeutet).

Denkbar ist auch, dass alternativ oder zusätzlich die Öffnung 42 durch eine Scheibe, beispielsweise eine Glasscheibe, verschlossen ist, um einen Luftaustausch zwischen der Hauptkammer 36 und der Nebenkammer 38 zu verhindern. Die Scheibe ist dabei für die thermische Strahlung der Folie F durchlässig, und das Messgerät 18 und/oder die Steuereinheit 20 sind derart ausgebildet, dass die gegebenenfalls durch die Scheibe veränderten Messwerte die Messung der Temperatur im Messbereich M nicht negativ beeinflussen. Beispielsweise werden die Messgeräte 18 und/oder die Steuereinheit 20 dahingehend kalibriert.

Zudem decken die Blickfelder B auch die Ränder in Querrichtung des Laufbereichs L ab, sodass sich der Messbereich M über die gesamte Breite des Laufbereichs L und somit der Folie F erstreckt.

Während des Betriebs der Reckanlage 10 messen die Messgeräte 18 die Temperatur von Gegenständen in ihrem Blickfeld B. Während des Betriebs der Reckanlage 10 ist dies die Folie F, die im Laufbereich L geführt wird.

Die Messgeräte 18 bestimmen somit die Temperatur der Folie F in dem Teil des Messbereichs M, der durch ihr Blickfeld B gebildet ist. Die gemessenen Temperaturen, d.h. die von den Messgeräten 18 ermittelten Messwerte, werden an die Steuereinheit 20 übermittelt.

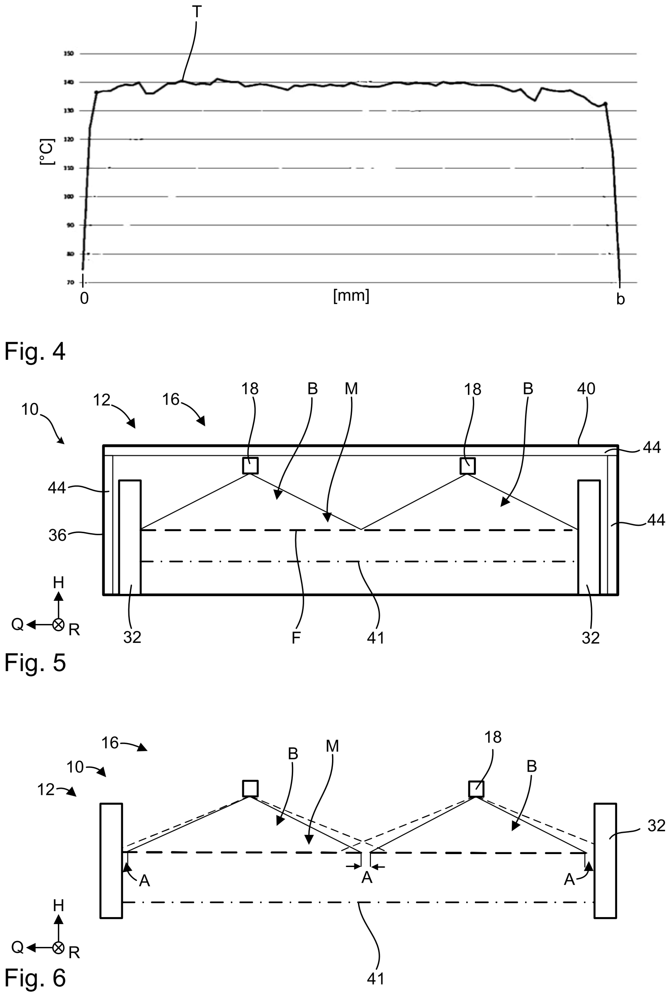

Die Steuereinheit 20 ermittelt ein Temperaturprofil T, wie beispielhaft in Figur 4 gezeigt, das auf den empfangenen Messwerten und somit auf den gemessenen Temperaturen der Messgeräte 18 basiert. Dabei basiert das Temperaturprofil T auf den gemessenen Temperaturen von verschiedenen Messgeräten 18, insbesondere von allen Messgeräten 18 der entsprechenden Temperaturmessvorrichtung 16, und ist ein durchgängiges Temperaturprofil T, das den Temperaturverlauf der Folie F über die gesamte Breite der Folie F wiedergibt.

Dabei erzeugt die Steuereinheit 20 pro Messzeitraum ein Temperaturprofil T, basierend auf den Werten der verschiedenen Messgeräte 18.

Das Temperaturprofil T gibt den Verlauf der Temperatur in Richtung der Längsausdehnung des Messbereichs M wieder, die im gezeigten Ausführungsbeispiel mit der Querrichtung Q übereinstimmt.

Das Temperaturprofil T deckt dabei zumindest den gesamten Messbereich M ab und bildet dementsprechend den Verlauf der Temperatur über der gesamten Breite des Laufbereichs L und somit der Folie F ab.

Das Temperaturprofil T wird von der Steuereinheit 20 anschließend ausgegeben, beispielsweise wird es an die Anlagensteuerung 34 übermittelt. Ein Bediener oder eine automatische Steuerung der Anlagensteuerung 34 kann dann zum Beispiel Parameter der Reckanlage 10, beispielsweise die Temperaturen der einzelnen Abschnitte der Zonen 22-30, anpassen.

Das Temperaturprofil T kann, beispielsweise für den Bediener, an einer Bildschirmeinheit der Steuereinheit oder an einem von der Steuereinheit entfernten Bildschirmeinheit ausgegeben werden, wie einem separaten Terminal, einer Bildschirmeinheit der Anlagensteuerung oder einem mobilen Endgerät (z.B. Smartphone, Tablet oder Laptop).

Das Temperaturprofil T kann dabei ein Standbild sein, das manuell oder regelmäßig aktualisiert wird, oder ein Echtzeitbild, wenn die Temperaturmessung kontinuierlich erfolgt.

In Figur 4 ist ein Temperaturprofil T, das aus den gemessenen Temperaturen verschiedener Messgeräte 18 gewonnen wurde, beispielhaft dargestellt. Auf der X-Achse erstreckt sich das Diagramm zwischen 0 mm, die den Anfang der Folie F bzw. des Laufbereichs L darstellt, bis b, die der Breite des Laufbereichs L bzw. der Folie F entspricht. Beispielsweise ist b 14 000 mm.

Gut zu erkennen ist, dass eine einzelne Temperaturkurve im Temperaturprofil T enthalten ist, obwohl die Temperaturen zwischen 0 und b durch verschiedene Messgeräte 18 ermittelt wurden.

Es ist mittels der Erfindung somit auf einfache Weise möglich, ein durchgängiges Temperaturprofil T zu erhalten, das die gesamte Breite der Folie F zusammenhängend abdeckt, wobei die Messung innerhalb des Ofens 12 stattfindet. Auf diese Weise kann der Ofen 12 besonders präzise eingestellt und die Qualität der hergestellten Folie F deutlich verbessert werden.

Die Figuren 5 bis 10 zeigen weitere Aspekte der Offenbarung, die im Wesentlichen der ersten Ausführungsform entsprechen. Im Folgenden wird daher lediglich auf die Unterschiede eingegangen, und gleiche und funktionsgleiche Teile sind mit denselben Bezugszeichen versehen.

Obwohl nur auf die erste Ausführungsform Bezug genommen wird, sind die Merkmale der verschiedenen weiteren Ausführungsformen auch miteinander kombinierbar.

Die zweite Ausführungsform, die schematisch in Figur 5 dargestellt ist, unterscheidet sich von der ersten Ausführungsform darin, dass die Messgeräte 18 innerhalb der Hauptkammer 36 angeordnet sind. Hierdurch kann auf die Nebenkammern 38 verzichtet werden.

Die Messgeräte 18 sind dabei derart zu wählen, dass ihre maximale Betriebstemperatur oberhalb der maximalen Betriebstemperatur des Ofens 12 liegt.

In Figur 6 ist eine dritte Ausführungsform dargestellt, wobei Details zum Ofen 12 der Übersichtlichkeit halber ausgelassen wurden. Die Messgeräte 18 können somit innerhalb der Hauptkammer 36 gemäß der zweiten Ausführungsform oder innerhalb von Nebenkammern 38 gemäß der ersten Ausführungsform angeordnet sein.

In dieser dritten Ausführungsform grenzen die Blickfelder B nicht aneinander an, sondern weisen einen Abstand A im Laufbereich L zueinander auf. Zudem ist ein Abstand A zwischen dem Rand des Blickfelds B und dem Rand des Laufbereichs L bzw. der Folie F auf beiden Seiten vorhanden.

Der Messbereich M ist somit nicht mehr ununterbrochen und deckt nicht mehr den gesamten Laufbereich L bzw. die gesamte Folie F ab.

Die Steuereinheit 20 kann so ausgebildet sein, dass sie ein einziges Temperaturprofil T ermittelt und ausgibt, das auch Bereiche außerhalb des Messbereichs M umfasst. Beispielsweise berechnet die Steuereinheit 20 auf Basis der gemessenen Temperatur Werte für die Temperatur in den Bereichen der Abstände A und kann auf diese Weise ein Temperaturprofil T ermitteln und ausgeben, das den gesamten Laufbereich L bzw. die gesamte Folie F in ihrer Breite umfasst.

Denkbar ist auch, dass die Blickfelder B der Messgeräte 18 einander überlappen, wie durch die gestrichelten Linien in Figur 6 angedeutet ist. Auf diese Weise kann die Steuereinheit 20 aufgrund der doppelten gemessenen Temperaturen im Bereich des Überlapps die gemessenen Temperaturen der Messgeräte 18 aneinander anpassen, d.h. die Messgeräte 18 miteinander kalibrieren. Der Bereich des Überlapps wird im Temperaturprofil T - obwohl zweifach gemessen - nur einmal dargestellt, damit das Temperaturprofil T der gemessenen Folie entspricht.

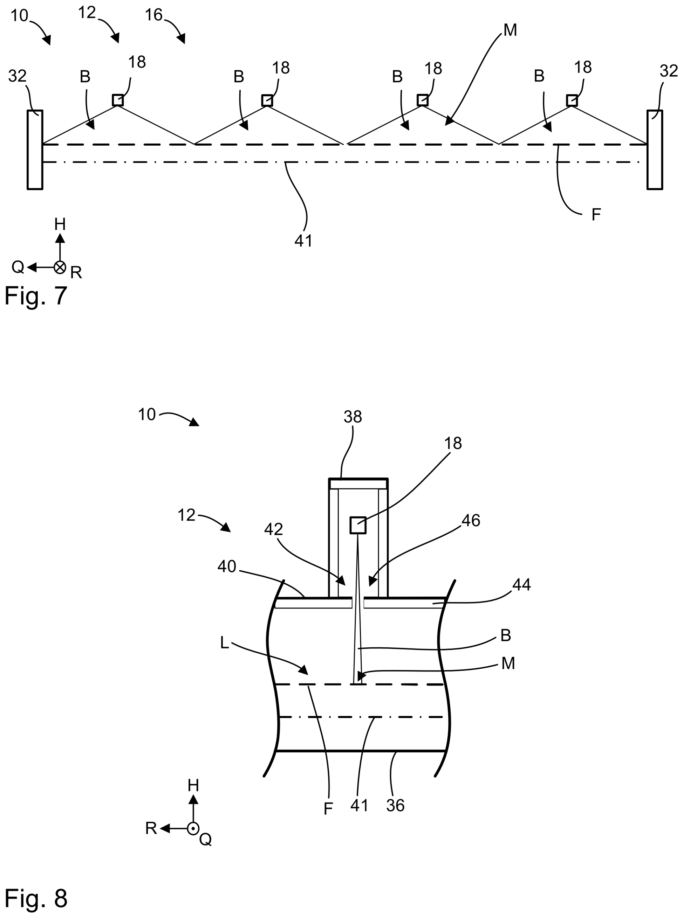

In Figur 7 ist eine vierte Ausführungsform der Erfindung dargestellt. Im Unterschied zu den vorhergegangenen Ausführungsformen weist die Temperaturmessvorrichtung 16 nun vier Messgeräte 18 auf. Beispielsweise können mittels vier Messgeräten 18 auch Temperaturprofile T für Folien F ermittelt werden, die eine Breite von bis zu 14 000 mm haben, wobei der Messbereich M ununterbrochen oder überlappend ist.

In Figur 8 ist eine fünfte Ausführungsform der Erfindung in einer Schnittansicht dargestellt, die der Ansicht der Figur 3 entspricht.

Im Unterschied zur ersten Ausführungsform ist in dieser Ausführungsform kein Luftvorhang in oder an den Öffnungen 42 vorgesehen.

In einem unabhängigen erfinderischen Aspekt, der derzeit nicht Teil der beanspruchten Erfindung ist, weist die Temperaturmessvorrichtung 16 nur ein Messgerät 18 auf. Das Messgerät 18 ist, wie zuvor beschrieben, in einer Nebenkammer 38 des Ofens 12 angeordnet. Das Temperaturprofil T basiert dann auf den gemessenen Temperaturen dieses einen Messgeräts 18.

Insbesondere weist der Ofen 12 im Bereich dieser Temperaturmessvorrichtung 16 nur eine einzige Nebenkammer 38 auf.

Mittels einer solchen Temperaturmessvorrichtung 16 kann die Temperatur eines bestimmten Bereichs der Folie F ermittelt werden oder es kann das Temperaturprofil der Folie F entlang der Breite der gesamten Folie F vor dem Verstrecken ermittelt werden.

Im Übrigen kann die Reckanlage 10 wie zuvor beschrieben ausgestaltet sein.

Denkbar ist, dass die Reckanlage 10 mehrere Temperaturmessvorrichtungen 16 aufweist, wobei zumindest eine der Temperaturmessvorrichtungen 16 mehrere Messgeräte 18 hat und zumindest eine andere der Temperaturmessvorrichtungen 16 nur ein Messgerät 18 hat.

Zum Beispiel kann es sich bei den in Figur 1 dargestellten Temperaturmessvorrichtungen 33 um Temperaturmessvorrichtungen 33 mit nur einem Messgerät 18 handeln.

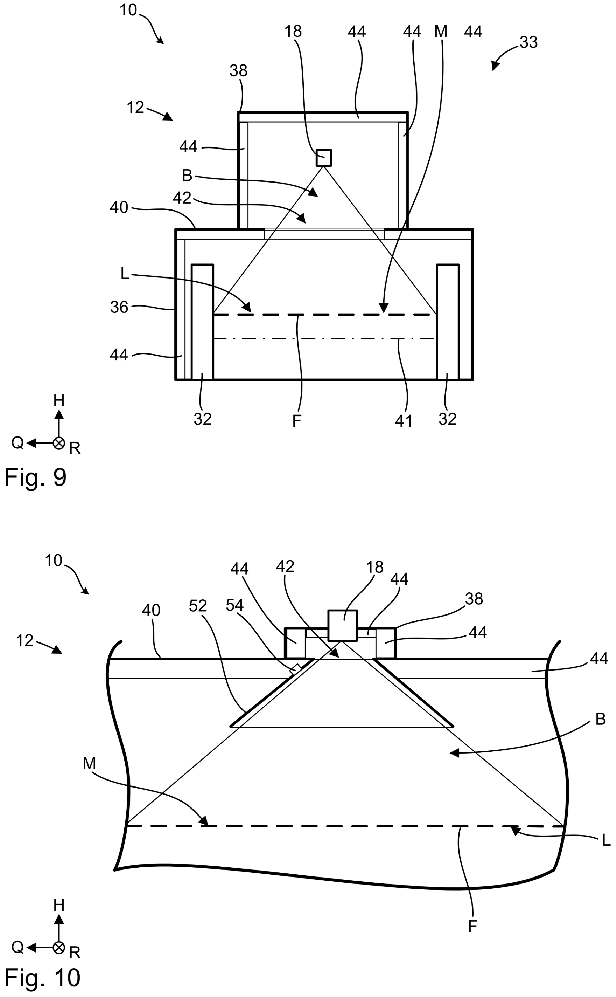

Die Temperaturmessvorrichtungen 33 mit nur einem Messgerät 18 sind zum Beispiel in Bereichen des Ofens 12 vor der Reckzone der Folie F vorgesehen, wie am Anfang und am Ende der Vorheizzone. Ein Schnitt, entsprechend dem von Figur 2, durch eine solche Temperaturmessvorrichtung 33 mit genau einem Messgerät 18 ist in Figur 9 gezeigt.

Die Reckanlage 10 kann daher Temperaturmessvorrichtungen 16 an jeder Stelle in Laufrichtung R aufweisen, sodass eine Temperaturmessung der Folie F an jedem Punkt realisiert werden kann.

In Figur 10 ist eine sechste Ausführungsform der Reckanlage 10 schematisch in einem Schnitt dargestellt, der dem Schnitt der Figur 2 entspricht, wobei nur eine Temperaturmessvorrichtung 16 dargestellt ist.

In dieser Ausführungsform ist das Messgerät 18 teilweise innerhalb der Nebenkammer 38 angeordnet und teilweise außerhalb. Das Messgerät 18 erstreckt sich somit durch die Dämmplatte 44, insbesondere an der Decke der Nebenkammer 38.

Der optische Eingang des Messgerätes 18, beispielsweise die Linse, befindet sich innerhalb der Nebenkammer 38, sodass das Blickfeld B des Messgeräts 18 dem Blickfeld der zuvor beschriebenen Ausführungsformen entspricht.

Hingegen befinden sich die Rückseite und die elektrischen Anschlüsse des Messgeräts 18 außerhalb der Nebenkammer 38, sodass die Anschlüsse des Messgerätes 18 von außen zugänglich sind.

Ein weiterer Unterschied zu den vorangegangenen Ausführungsformen, der jedoch unabhängig von der Lage des Messgeräts 18 teilweise außerhalb der Nebenkammer 38 ist, liegt darin, dass um die Öffnung 42 ein Trichter 52 vorgesehen ist.

Der Trichter 52 erstreckt sich von der entsprechenden Wandung 40 der Hauptkammer 36, im gezeigten Ausführungsbeispiel der Decke, zum Laufbereich L hin und endet beabstandet zum Laufbereich L. Beispielsweise ist der Trichter 52 an der Wandung 40 der Hauptkammer 36 befestigt.

Der Trichter 52 öffnet sich zum Laufbereich L hin, insbesondere im gleichen Maße, wie sich das Blickfeld B des Messgeräts 18 zum Laufbereich L hin öffnet.

Die Öffnungsweite des Trichters 52 in Querrichtung Q und in Laufrichtung R entspricht dabei stets der Ausdehnung des Blickfelds B in Querrichtung Q bzw. Laufrichtung R. Beispielsweise ist die Öffnungsweite des Trichters 52 größer als das Blickfeld B.

Denkbar ist zudem, dass die Reckanlage 10 einen Ventilator 54 aufweist, dessen Luftauslass fluidisch mit dem Inneren des Trichters 52 verbunden ist. In Figur 10 ist der Ventilator 54 direkt am Trichter 52 befestigt. Jedoch ist es auch denkbar, dass der Ventilator 54 an anderer Stelle vorgesehen ist und ein Strömungskanal, wie ein Schlauch, vom Ventilator 54 ausgehend in den Trichter 52 verläuft.

Der Ventilator 54 kann seine Zuluft aus der Hauptkammer 36 beziehen. Denkbar ist jedoch auch, dass die Zuluft des Ventilators 54 Luft aus der Nebenkammer 38 oder Frischluft ist, wodurch jedoch die Temperatur im Ofen 12 beeinflusst wird.

Im Betrieb fördert der Ventilator 54 Luft in das Innere des Trichters 52, sodass sich ein Luftstrom aus dem Trichter 52 hinaus zum Laubreich L hin ausbildet. Auf diese Weise wird verhindert, dass Ausdampfungen der Folie F oder sonstige Stoffe, die die Linse des Messgeräts 18 verschmutzen könnten, zum Messgerät 18 gelangen. Zudem wird eine thermische Trennung erreicht.

Ein Luftvorhang 46 ist bei Verwendung eines Ventilators 54 nicht notwendig.

## Patentansprüche

1. Reckanlage zum Recken einer Folie (F), insbesondere eine Querund/oder Simultan-Reckanlage, mit einem Ofen (12), in dem ein Laufbereich (L) für die Folie (F) definiert ist, und wenigstens einer Temperaturmessvorrichtung (16) mit wenigstens zwei Messgeräten (18) und einer Steuereinheit (20),
wobei die Messgeräte (18) jeweils ein Blickfeld (B) haben und dazu eingerichtet sind, die Temperatur der Folie (F) im Blickfeld (B) optisch zu messen, wobei die Blickfelder (B) im Bereich des Laufbereichs (L) linienförmig sind und einen Messbereich (M) definieren,
wobei die Steuereinheit (20) dazu ausgebildet ist, ein Temperaturprofil (T) zu ermitteln, das auf im Messbereich (M) gemessenen Temperaturen basiert, wobei die Temperaturen für das Temperaturprofil (T) von verschiedenen der Messgeräte (18) gemessen wurden.

2. Reckanlage nach Anspruch 1, **dadurch gekennzeichnet, dass** die Messgeräte (18) oberhalb oder unterhalb des Laufbereichs (L) angeordnet sind, und/oder dass die Messgeräte (18) IR-Kameras, Linescanner und/oder Wärmebildkameras sind.

3. Reckanlage nach Anspruch 1 oder 2, **dadurch gekennzeichnet, dass** sich das Temperaturprofil (T) und/oder der Messbereich (M) quer zur Laufrichtung (R) der Folie (F) entlang des Laufbereichs (L) erstreckt und/oder über die gesamte Breite des Laufbereichs (L) erstreckt.

4. Reckanlage nach einem der vorhergehenden Ansprüche, **dadurch gekennzeichnet, dass** sich die Blickfelder (B) der Messgeräte (18) quer zur Laufrichtung (R) der Folie (F) entlang des Laufbereichs (L) erstrecken und/oder parallel zueinander sind, insbesondere auf einer gemeinsamen Geraden liegen.

5. Reckanlage nach einem der vorhergehenden Ansprüche, **dadurch gekennzeichnet, dass** die Blickfelder (B) der Messgeräte (18) im Laufbereich (L) aneinander angrenzen oder teilweise überlappen und/oder der Messbereich (M) ununterbrochen ist.

6. Reckanlage nach einem der vorhergehenden Ansprüche, **dadurch gekennzeichnet, dass** der Ofen (12) eine Hauptkammer (36) aufweist, durch die sich der Laufbereich (L) erstreckt, insbesondere wobei die Messgeräte (18) in der Hauptkammer (36) angeordnet sind.

7. Reckanlage nach Anspruch 6, **dadurch gekennzeichnet, dass** der Ofen (12) wenigstens eine Nebenkammer (38) aufweist, die mit der Hauptkammer (36) optisch verbunden ist, wobei die Messgeräte (18) in der oder mehreren der wenigstens einen Nebenkammer (38) angeordnet sind, insbesondere sind die Messgeräte (18) vollständig in der entsprechenden Nebenkammer (38) angeordnet oder teilweise in der entsprechenden Nebenkammer (38) und teilweise außerhalb des Ofens (12) angeordnet.

8. Reckanlage nach Anspruch 7, **dadurch gekennzeichnet, dass** die Hauptkammer (36) eine Wandung (40) aufweist, in der wenigstens eine Öffnung (42) ausgebildet ist, die in eine entsprechende der Nebenkammern (38) mündet, wobei sich das Blickfeld (B) des in der entsprechenden Nebenkammer (38) angeordneten Messgeräts (18) durch die Öffnung (42) in die Hauptkammer (36) erstreckt.

9. Reckanlage nach Anspruch 8, **dadurch gekennzeichnet, dass** die Breite und/oder die Länge der Öffnung (42) größer als die Breite bzw. Länge des Blickfelds (B) im Bereich der Öffnung (42) ist, insbesondere der Breite bzw. der Länge des Blickfelds (B) im Bereich der Öffnung (42) entspricht.

10. Reckanlage nach einem der Ansprüche 7 bis 9, **dadurch gekennzeichnet, dass** der Ofen (12) dazu ausgebildet ist, wenigstens einen Luftvorhang (46) für eine der wenigstens einen Nebenkammer (38) zu erzeugen, wobei der Luftvorhang (46) einen Luftaustausch zwischen der Hauptkammer (36) und der entsprechenden Nebenkammer (38) reduziert oder unterbindet, insbesondere wobei der Luftvorhang (46) in der zugehörigen Öffnung (42), innerhalb der Hauptkammer (36) die zugehörige Öffnung (42) abdeckend oder innerhalb der Nebenkammer (38) die zugehörige Öffnung (42) abdeckend angeordnet ist.

11. Reckanlage nach Anspruch 10, **dadurch gekennzeichnet, dass** der Ofen (12) für jeden des wenigstens einen Luftvorhangs (46) einen Luftauslass (48) zur Erzeugung des Luftvorhangs (46) aufweist, wobei der Luftauslass (48) in die zugehörige Öffnung (42), in die Hauptkammer (36) an die zugehörige Öffnung (42) angrenzend oder in die Nebenkammer (38) an die zugehörige Öffnung (42) angrenzend mündet.

12. Reckanlage nach einem der Ansprüche 8 bis 11, **dadurch gekennzeichnet, dass** in der Hauptkammer (36) ein Trichter (52) angeordnet ist, der eine der wenigstens einen Öffnung (42) umgibt, sich von der entsprechenden Wandung (40), in der die wenigstens eine Öffnung (42) vorgesehen ist, aus zum Laufbereich (L) hin erstreckt, und sich zum Laufbereich (L) hin weitet, insbesondere wobei die Reckanlage (10) einen Ventilator (54) aufweist, der dazu ausgebildet ist, Luft in das Innere des Trichters (52) zu fördern.

13. Reckanlage nach einem der Ansprüche 6 bis 12, **dadurch gekennzeichnet, dass** die Hauptkammer (36), insbesondere die Wandung (40), und/oder die Nebenkammer (38) gegenüber einander und/oder zur Umgebung des Ofens (12) hin thermisch isoliert sind.

14. Reckanlage nach einem der vorhergehenden Ansprüche, **dadurch gekennzeichnet, dass** die Temperaturmessvorrichtung (16) drei, vier oder mehr Messgeräte (18) aufweist, und/oder dass die Steuereinheit (20) in eines der Messgeräte (18) integriert ist, separat von den Messgeräten (18) ist, eine vom Ofen (12) separate Computereinheit ist und/oder in eine Anlagensteuerung (34) der Reckanlage (10) integriert ist.

15. Reckanlage nach einem der vorhergehenden Ansprüche, **dadurch gekennzeichnet, dass** die Temperaturmessvorrichtung (16) am Eingang des Ofens (12), am Ausgang des Ofens (12), in einer Vorheizzone (22) des Ofens (12), insbesondere an deren Ende, in einer Reckzone (24) des Ofens (12), insbesondere an deren Ende, in einer Annealingzone (26) des Ofens (12), insbesondere an deren Anfang, in einer Neutralzone (28) des Ofens (12) zwischen der Annealingzone (26) und einer Kühlzone (30) des Ofens (12), und/oder in der Kühlzone (30) angeordnet ist; und/oder dass die Reckanlage (10) mehrere Temperaturmessvorrichtungen (16) aufweist.
